# EUROPEAN PATENT APPLICATION

(11) **EP 3 332 680 A1**
(43) Date of publication of application: **13.06.2018**
(21) Application number: 17159092.0
(22) Date of filing: 03.03.2017
(51) Int. Cl.: A47J 31/56, A47J 27/21

(54) **ALTITUDE PROTECTION FOR BREWING DEVICES**

(30) Priority: 06.12.2016 US 201615370930
(71) Applicant: Eternal East (HK) Ltd., Hong Kong (HK)
(72) Inventor: GROSS, Charles Brian, Greeley, CO 80634 (US); LIU, Xiaoqiang, Hetang district, Hunan province Zhuzhou 412000 (CN); CHENGPING, Shen, Shanxi province Yuanqu 043700 (CN)
(74) Representative: Misselhorn, Hein-Martin

(57) **Abstract**

High-altitude protection logic for brewing devices is provided. An actual temperature of a liquid during a heating process is compared to a high-altitude temperature programmed into a controller. If the actual temperature rises to the high-altitude temperature before a default target temperature of the heating process, then one or more time periods may begin to run. If the actual temperature has not changed or the default target temperature has not been reached after a time period elapses, the high-altitude protection logic terminates the heating process. A maximum value of the actual temperature measured during the heating process may replace the programmed default target temperature for subsequent brewings. The new default target temperature may be used to inform and modify a target keep warm temperature for subsequent keep warm mode uses. These stored may be reset to initial program values if the device is disconnected from its power source.

## Description

### BACKGROUND

The present disclosure relates generally to automatic beverage brewing devices, and specifically to a protection logic for reducing and/or preventing the overboiling of liquids in such devices at higher elevations.

Modern brewing devices, such as automatic coffeemakers and digital kettles, have been developed to streamline the brewing process for beverages. In many such devices, a user takes simple preparation steps such as adding a liquid (e.g., water) and preparing the tea/coffee, and then turns on the device to begin an automatic brewing process. The device may run a preset program to control heating of the liquid and time for brewing. It is common for devices to heat a liquid to a set temperature point selected by the user or preprogrammed into the device, which may be controlled using timers and/or temperature sensor feedback. For example, coffee is commonly brewed at 195°F (90.5°C) to 205°F (96°C), while teas are often brewed between 160°F (71°C) to 212°F (100°C). However, such automatic brewing devices frequently do not account for changes in boiling temperatures across different elevations. Although water at sea level boils at 100°C (212°F), the boiling point of water decreases at higher altitudes due to the corresponding decrease in atmospheric pressure. By using a standard operating program across higher altitudes, brewing devices may be heated far longer than desirable since the actual boiling point is reached before a preprogrammed or selected target temperature. Therefore, such devices unnecessarily continue the heating process in an attempt to raise the actual temperature to the preset target temperature or by running a timer program configured for a lower altitude, which risks boiling off too much liquid and causing damage to the device. The decrease in efficiency also increases power consumption and thus net operational costs. Moreover, benefits of user accessibility and automation are decreased if a device requires a manual user input to adapt the brewing process to a particular elevation.

Some brewing devices also have a "keep warm" mode to maintain a high temperature of the liquid over an extended length of time so that users may utilize the heated liquid at their leisure. It is often preferable to set the keep warm temperature close to the boiling point to ensure the liquid remains hot. However, if the keep warm mode is operated at a high altitude, circumstances may arise where the target keep warm temperature is greater than the actual boiling point temperature. In these cases, brewing devices that do not account for altitude will continuously boil the liquid while trying to reach the keep warm temperature or running a preset timer program. This leads to the liquid boiling off, such that a user is unable to utilize all or any of the liquid intended to be kept warm. Further, excessive overboiling over extended periods of time may cause device damage, energy waste, and pose a fire safety hazard.

In some brewing devices, a mechanical solution is employed to prevent overboiling. A steam return conduit may lead to a bimetallic switch in the device. Due to continued heating after the liquid boiling point, excess steam will be forced down the steam return conduit and travel to the bimetallic switch, thereby heating the bimetallic switch. At a certain point, mechanical actuation of the bimetallic switch will occur and trigger the heating element(s) to shut off. This approach often results in excess water accumulating and/or leaking from the base of the device as the steam from the steam return conduit condensates. Additionally, the approach requires the device to be designed in such a way that a steam return conduit connects a liquid cavity to a bimetallic switch, and that the bimetallic switch is configured to terminate the heating process. Such a design is not readily available, or at the least requires additional structural components that may not be desirable, in certain variable temperature brewing devices wherein the heating element is positioned in the base and the liquid vessel is removably positioned thereon. Moreover, since the bimetallic switch kills the heating process entirely, the device loses utility with respect to a keep warm mode for maintaining temperature over time.

The foregoing examples of the related art and limitations therewith are intended to be illustrative and not exclusive. Other limitations of the related art will become apparent to those of skill in the art upon a reading of the specification and a study of the drawings.

### SUMMARY

The following embodiments and aspects thereof are described and illustrated in conjunction with systems, tool and methods which are meant to be exemplary and illustrative, not limiting in scope. In various embodiments, one or more of the above described problems have been reduced or eliminated, while other embodiments are directed to other improvements.

Embodiments of the present disclosure provide a high-altitude control or protection logic for use in automatic brewing processes. A high-altitude protection logic according to the present disclosure reduces and/or prevents the overheating of brewing devices and the overboiling of liquids contained therein, which risks consequential damage to the device and an overall decrease in beverage quality. Likewise, high-altitude control logics reduce unnecessary energy consumption of brewing devices, thereby increasing overall efficiency of the device. The term brewing device as used herein includes, but is not limited to, automatic steeping devices, coffeemakers and kettles.

In one embodiment, a method for controlling a heating process using high-altitude protection logic in a brewing device is provided. The method may comprise measuring an actual temperature of a liquid using a temperature sensor, wherein the heating process is configured to be automatically terminated when the actual temperature reaches a default target temperature programmed into a controller. Next, the actual temperature may be compared to a high-altitude temperature programmed into the controller as the liquid is heated. If the actual temperature rises to the high-altitude temperature, then a first time period programmed into the controller may begin running during which the actual temperature is measured. If the actual temperature has not changed when the first time period expires, then the heating process may also be automatically terminated. If the actual temperature of the liquid has changed when the first time period expires, a second time period programmed into the controller may begin to run, wherein the heating process is automatically terminated upon the first of either the actual temperature rising to the default target temperature or the second time period expiring. Thereafter, the maximum value of the actual temperature measured during the heating process may replace the default target temperature programmed in the controller for subsequent uses. Further, the stored settings of the controller may reset to the default registry, such that the default target temperature is returned to its initial value setting, when the brewing device is disconnected from its power source.

In another embodiment, a brewing device may be configured to automatically adjust a heating process for brewing beverages at different elevations. The brewing device may comprise at least a heat source configured to heat a liquid; a temperature sensor configured to measure an actual temperature of the liquid; and a programmable controller configured to run a control program, receive information from the temperature sensor, and control the heat source. The control program may have settings for a default target temperature of the heating process, an elevation or high-altitude temperature, and one or more time periods. The control program may be configured to terminate heating of the liquid by the heat source when the actual temperature measured by the temperature sensor equals the default target temperature. If the actual temperature of the liquid equals the elevation temperature before reaching the default target temperature, a high-altitude protection logic may be triggered, wherein a first time period begins to run. If the actual temperature as measured during the first time period does not change, then the control program may terminate heating by the heat source. On the other hand, if the actual temperature increases, then a second time period may begin to run such that the control program terminates heating if the actual temperature reaches the default target temperature before the second time period expires or by the expiration of the second time period. Thereafter, the default target temperature programmed in the control program may be replaced by a maximum value of the actual temperature measured during the heating process. These stored settings may be reset when the brewing device is disconnected from its power source.

In further embodiments, brewing devices having a high-altitude protection logic and methods for implementing such high-altitude protection logic may also comprise a keep warm mode function. For instance, the maximum actual temperature measured during an initial process may replace a default initial heating temperature, and then be used to inform and adjust a target keep warm temperature setting for future keep warm uses, such that the keep warm temperature is below the maximum actual temperature. Therefore, a keep warm mode programmed on a controller may be configured to initiate a subsequent heating process to maintain a target keep warm temperature, wherein the target keep warm temperature is checked against a stored maximum actual temperature and modified to be less than it (e.g., between approximately 1-5°C lower). The keep warm mode may also be configured to terminate upon expiration of a keep warm time setting. The keep warm time setting may provide for continued operation of the keep warm mode for a period of time, for example up to approximately two hours. The target keep warm temperature, like the default target temperature for initial heating, may be reset to initial registry settings when the brewing device is disconnected from its power source.

In addition to the aspects and embodiments described above, further aspects and embodiments will become apparent by reference to the accompanying drawings and the detailed description forming a part of this specification.

### BRIEF DESCRIPTION OF THE DRAWINGS

The present disclosure is described in greater detail below with reference to the following figures:
FIG. 1 shows a schematic diagram of a brewing device;
FIG. 2 shows a process flowchart for an embodiment of a brewing process using high-altitude protection logic; and
FIG. 3 shows a process flowchart for an embodiment of a brewing process using high-altitude protection logic in an initial heating process and a subsequent keep warm mode.

Before further explaining the depicted embodiments, it is to be understood that the invention is not limited in its application to the details of the particular arrangements shown, since the invention is capable of other embodiments. It is intended that the embodiments and figures disclosed herein are to be considered illustrative rather than limiting. Also, the terminology used herein is for the purposes of description and not limitation.

### DETAILED DESCRIPTION

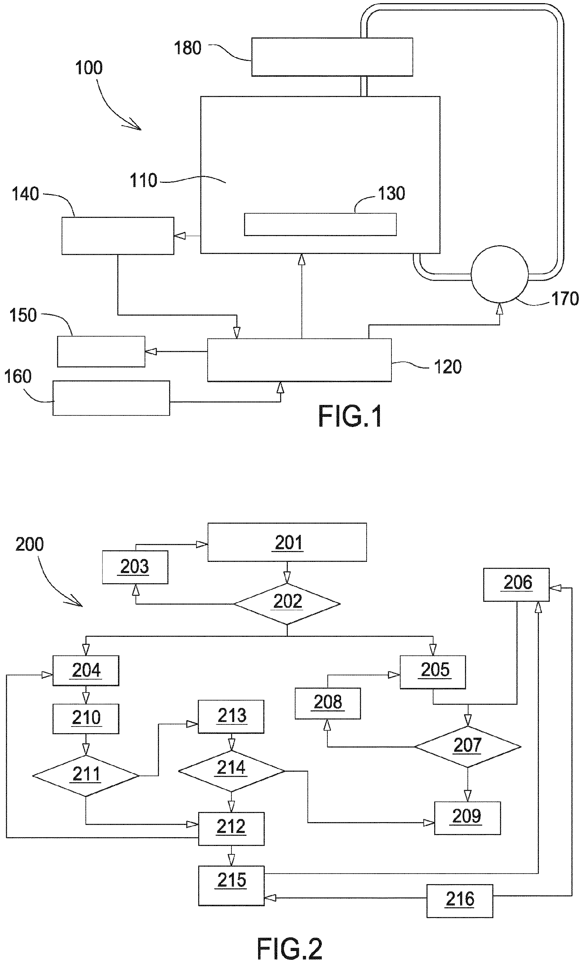

FIG. 1 shows a schematic diagram of a brewing device 100 for brewing beverages. It should be appreciated that many different types of brewing devices are known in the art; this depiction is provided for illustrative purposes only and the present disclosure is not limited to the specifically depicted device. A high-altitude protection logic may be employed across a wide range of applications, including those requiring accurate temperature control and keep warm functionality (e.g., heating a liquid near or to the boiling point and maintaining high temperature for an extended length of time). Likewise, although coffee/tea brewing is described for illustrative purposes, other types of beverages may benefit from the present disclosure, such as botanicals and medicinal drinks. In the brewing device 100, the brewing process and components therein are controlled by a programmable controller 120. The programmable controller 120 may be comprised, alone or in combination with other components, of any suitable processor for receiving input/feedback signals, transmitting output/control signals, and executing a control program. It should be appreciated that different structural configurations for controlling a brewing process are possible, and the present disclosure is not limited to any specific arrangement. Liquid is placed inside a container 110 of the device for brewing. During the brewing process, the liquid inside the container 110 is heated by one or more heating elements 130 to at or near its boiling point temperature during a heating process. In this particular embodiment, the heated fluid then passes through a pump 170 and drains into a filter basket 180, where it is strained through a flavoring element (e.g., coffee grinds). The strained liquid may then pass into a separate vessel or be returned to the heated container for additional cycles. The brewing process may be initiated by input commands from a user to a control panel 160, which then communicates the input signals to the programmable controller 120. For instance, input commands may include manually setting a target temperature or selecting a preset brewing program. Likewise, the programmable controller 120 may communicate information to a user through a display 150. The programmable controller controls the one or more heating elements 130 in heating the liquid to the set or default target temperature, as well as other components in the device (e.g., the pump). In this sense, the programmable controller may run a control program to coordinate operation of the components of the brewing device during the brewing process. If the programmable controller is positioned in the base of the device, various methods may be used to communicate (e.g., a five-pole connector) with components located in a removable vessel/kettle therefrom (e.g., heating elements; sensors). A temperature sensor 140 may be used to measure the actual temperature of the liquid during the heating process in a negative feedback loop manner. The temperature sensor 140 (e.g., a negative temperature coefficient type thermistor) conveys temperature information to the programmable controller 120, and when the target end temperature is reached, the programmable controller turns off the one or more heating elements 130, thereby terminating the heating process. The target end temperature may be manually selected or programmed to a preset default boiling point (e.g., for water at sea level) or near to it without any regard to lower boiling points that occur at different elevations. The result is that the heating elements may remain on even after the actual boiling temperature of the liquid has been reached. Likewise, the programmable controller can run a timer program, the set duration of which may fail to consider the effect of lower boiling points on the heating process. Depending on the specific brewing device, overboiling under such circumstances risks excess loss of liquid in the container and may cause damage to the device from overheating a container with insufficient fluid content. Likewise, if the brewing device has a keep warm mode but does not account for reduced boiling temperatures, damage to the device may result where heating is extended to maintain a temperature that is below a programmed keep warm target temperature, but above the actual boiling point of the liquid at that elevation.

In the flowchart of FIG. 2, an embodiment of a brewing device with a brewing process using control logic for high-altitude protection 200 is shown. The high-altitude protection logic is incorporated into the control program executed by the controller during the brewing process. The high-altitude protection logic is preset with a high-altitude/elevation temperature. In another embodiment, it may be possible for a user to manually set the high-altitude temperature, but it is preferable that this temperature be preprogrammed to avoid human input error (resulting in overboiling). It should also be appreciated that the high-altitude/elevation temperature setting may be set at any value. However, programmable controller/processor costs, computing capacity and anticipated demand, power supply and consumption, and spatial requirements, as well as the relationship of these aspects to the requirements of other components within the brewing device, may impact the selection of the actual high-altitude temperature setting. For instance, a smaller processor may be used and computing power preserved overall by selecting a relatively higher temperature as the control program's high-altitude value (e.g., 93°C instead of 86°C).

In the brewing using high-altitude protection logic 200, the one or more heating elements begin the heating process and the temperature sensor begins measuring/communicating an actual temperature of the liquid to the programmable controller 201. The actual temperature is compared to the high-altitude/elevation temperature 202, such that heating of the liquid will continue 203 until the actual temperature measured 201 reaches the high-altitude temperature. Once a comparison 202 indicates the actual temperature of the liquid has risen to the high-altitude temperature, the control program will then initiate the high-altitude protection/control logic 204, as discussed in more detail below. However, even though the high-altitude protection logic is initiated 204, the actual temperature 205 will continue to be measured and compared 207 to a default target temperature 206 programmed in the control program. For example, the default target temperature may be preprogrammed/preset to approximately 100°C in anticipation of use at sea level. If a comparison 207 indicates the actual temperature 205 is less than the default target temperature 206, heating of the liquid will continue 208 (unless otherwise terminated by the high-protection logic). If the actual temperature measured reaches the default target temperature, the heating process will automatically be terminated 209 by the control program and the programmable controller will cut off power to the one or more heating elements. Other aspects of the brewing process may or may not continue to occur at this point (e.g., pumping, filtering). In this case, the default target temperature is not reset/reprogrammed.

In one embodiment, initiation of the high-altitude protection logic 204 may start a counter and the running of a first time period 210. It should be appreciated that the duration of the first time period can be set to any appropriate value (e.g., 45 seconds) depending on the brewing device specifications, circumstances, and anticipated use. The first time period may be characterized as having a first start time and a first end time defining its duration. During the first time period 210, the one or more heating elements continue to provide heat to the liquid (unless otherwise terminated as described above 209). If a comparison of the actual temperature measured between the first start time and the first end time 211 indicates no change in temperature, the high-altitude protection logic will terminate the heating process 212. The reason being that if the actual temperature has not increased during the first time period despite continuous heating, then the boiling point of the liquid has been reached and no more heat is required. Likewise, if the target temperature is achieved before expiration of the first time period, the control program will terminate the heating process regardless (as described above 209). Absent a high-altitude control logic, the one or more heating elements would remain on because the default target temperature would not occur (i.e. the lower boiling point prevents a further increase in temperature), and therefore the temperature sensor would not provide feedback to the controller signaling the control program to terminate the heating process. In such a case, continued excessive heating once the actual boiling point is reached results in overboiling, thereby leading to loss of liquid content and/or damage to the device.

In a further embodiment, if the actual temperature measured by the temperature sensor changes between the first time period 210 (e.g., the actual temperature rises from 93°C to 95°C between the first start time and the first end time), then a second time period 213 will begin running. Like the first time period, the second time period can be defined in terms of a second start time and second end time. It should be appreciated that the duration of the second time period may be set for any appropriate value (e.g., 1 minute and 15 seconds) depending on the brewing device specifications, circumstances and anticipated use. During the second time period 213, the one or more heating elements continue heating the liquid in the container. If a comparison of the actual temperature measured by the sensor to the default target temperature 214 indicates that the default target temperature 206 has been reached during the second time period or when it expires, the control logic will cause the control program to terminate the heating process normally 209. In this case, the preprogrammed boiling point was reached so there is no need to continue heating, as may occur where the brewing device runs the high-altitude protection logic at sea level. Therefore, the termination of the heating process 209 is not designated to be a termination at high altitude 212. Alternatively, if the default target temperature is not reached by the second end time, the control program will also terminate the heating process 212. In this case, the measured actual temperature not reaching the default target temperature, despite continuous heating throughout the second time period, is considered a function of altitude 212, and the control program stops additional heating of the liquid to prevent potential overboiling and device damage.

One having skill in the art will recognize that the exact number and duration of the time periods provided in the high-altitude protection/control logic may be varied and still fall within the scope of the present disclosure. For example, the first time period may be repeated through a number of cycles (unless the default target temperature is reached) before the terminal second period is triggered. The frequency and duration of the time periods may be adapted by the control program selecting optimal parameters based upon the rate of temperature change being measured by the temperature sensor. Moreover, the high-altitude protection logic may be programmed such that the expiration of the second period does not automatically terminate the heating process or keep warm process if a threshold increase in temperature is measured between the second start time and the second end time, and additional measurement periods may be subsequently initiated. Accordingly, there are numerous approaches that may be employed by one having skill in practicing a high-altitude protection/control logic within the scope of the present disclosure. However, it should be appreciated that programmable controller/processor costs, computing capacity and anticipated demand, power supply and consumption, and spatial requirements, as well as the relationship of these aspects to the requirements of other components within the brewing device, may impact the selection of the duration and/or frequency of the time periods. For instance, a smaller processor may be used and computing power preserved overall by selecting a relatively longer duration and a smaller number of cycles for the control program's time periods.

In another embodiment, if the default target temperature 206 is not reached because the high-altitude protection/control logic terminated the heating process 212, then the highest actual temperature measured (the maximum value of the actual temperature) will be stored 215 and automatically replace the default target temperature 206 for subsequent uses. In other words, where the high-altitude protection logic operates to end the heating process 212, instead of by hitting the default target temperature 209, the highest temperature of the liquid recorded by the sensor will be set as the new default target temperature. Alternatively, the temperature value recorded by the sensor at the first end time and/or second end time may also be set as the new default target temperature in a high elevation termination circumstance 212. This dynamic optimizes self-calibration of the automated brewing process, thereby allowing the control program to adapt and update to a specific environment. Moreover, these learned settings-for example the stored max actual temperature 215 that replaces the default target temperature 206-can be cleared and reset to default control program registry settings when the brewing device is unplugged from its power source 216. The reset to default value settings may be configured to occur instantaneously, or the reset may occur after the expiration of a predetermined time period (e.g., a few minutes) to account for inadvertent/temporary power loss. In this way, continued use of a brewing device in the same location (when continuously plugged into a certain power source) facilitates optimization for a particular elevation, whereas moving the brewing device to a new location (recognized by unplugging the device for transport) resets the high-altitude protection/control logic of the control program and therefore permits renewed optimization at a different elevation.

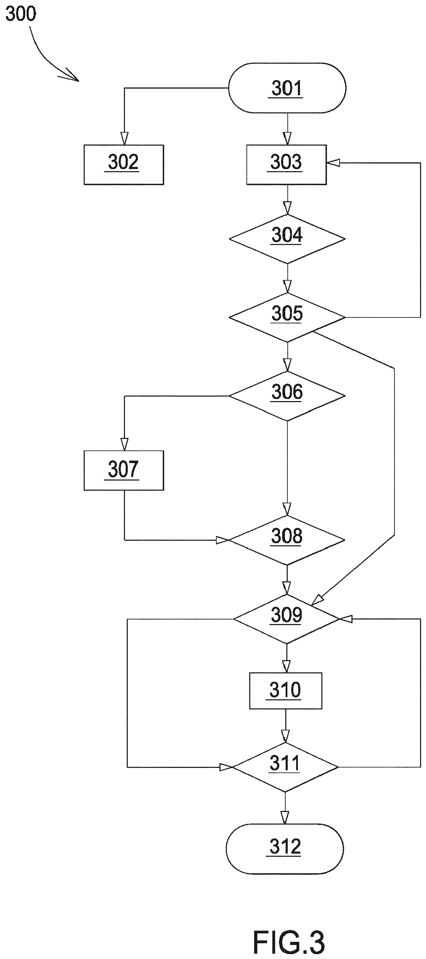

FIG. 3 shows a process flowchart for an embodiment of a brewing process using high-altitude protection logic in an initial heating process and a subsequent keep warm mode. In the depicted embodiment, the programmable controller of the brewing device will initiate the brewing process 301 (e.g., via user input or according to an automatic schedule). Information about the brewing process may be displayed on a display of the brewing device for user convenience 302. The liquid content of the brewing device is heated by one or more heating elements 303. As in the embodiment described with respect to FIG. 2, a high-altitude protection logic is initiated 304 when the actual temperature of the liquid, as measured by a temperature sensor, rises to a high-altitude/elevation temperature programmed into the high-altitude protection logic run by the brewing process control program. The heating process may be continued 303 until terminated by either the actual temperature rising to the programmed default target temperature or the high-altitude protection logic determining that the boiling point has already been reached as a function of elevation 305. If the high-altitude protection logic terminates the heating process, the maximum value of the actual temperature measured may replace the default target temperature for subsequent uses and also be incorporated into a keep warm process of the brewing device as described further below. At this point, the initial heating process is complete. The control program may check to determine whether to initiate a pump mode 306 or another brewing process step. Depending on the type of brewing device and/or specific process initiated, for instance, an impeller pump may be activated to continue the brewing process 307 (e.g., filtering hot water through a coffee filter). In other embodiments, no pump mode is initiated at this point since only the heated liquid alone is desired. Regardless of whether the liquid is acted upon further (e.g., tea leaves being steeped in it) after the initial heating process, the liquid will begin to cool at some rate depending on environmental and device characteristics, such as the thermal insulation of the liquid container for example. In response, it may be desirable to provide additional heating to maintain a high temperature of the liquid over a length of time, thereby providing additional convenience to users.

Accordingly, a keep warm mode may be activated 308 after completion of the initial heating process to maintain temperature. The keep warm mode may have a keep warm temperature set to be below the boiling point (e.g., a few degrees). For example, if the control program registry has a default target temperature of approximately 100°C for initial heating to the boiling temperature, then a default keep warm temperature may be around 97°C or so. However, as discussed above, certain embodiments of high-altitude protection logic will store the maximum actual temperature measured during the heating process (or at the end of a time period) and use it to replace the default target temperature for subsequent uses. Therefore, the control program may use the boiling point temperature, as determined at the termination of initial heating 305, to inform the keep warm temperature setting 309. For example, if the high-altitude control logic terminated the initial heating process and in doing so registered a boiling point of 95°C, then the keep warm temperature could be updated to reflect this information (e.g., changed from 97° to 93°). In this sense, high-altitude protection logic is incorporated into the keep warm mode as well to prevent overboiling during subsequent "keep warm" heating.

In one embodiment of a keep warm mode 308, the temperature sensor monitors the actual temperature to see if the target keep warm temperature 309 is maintained and communicates the information to the programmable controller. If the actual temperature of the liquid is below the target temperature or below the target by a certain threshold, then additional heating may be initiated 310. In another embodiment, once the target keep warm temperature is achieved, the control program checks a keep warm time setting 311 to determine whether to terminate the keep warm mode at that point. If the keep warm time setting 311 is satisfied (e.g., the keep warm mode has been operating for one hour), then control program will terminate the keep warm and/or brewing process 312. If the keep warm time setting 311 has not been met yet, the control program may continue to monitor the keep warm temperature 309 and repeat the cycle. It should be appreciated that the keep warm time setting 311 may be preprogrammed into the control program or manually set by a user based on specific needs. While there is no requirement to use a keep warm time setting, it may be advantageous to avoid situations where a user forgets the brewing device is running, which may result in wasted energy, device damage, and/or safety hazards.

While a number of aspects and embodiments have been discussed above, those of skill in the art will recognize certain modifications, permutations, additions and sub-combinations therefore. It is therefore intended that the following appended claims hereinafter introduced are interpreted to include all such modifications, permutations, additions and sub-combinations, which are within their true spirit and scope. Each embodiment described herein has numerous equivalents.

The terms and expressions which have been employed are used as terms of description and not of limitation, and there is no intention in the use of such terms and expressions of excluding any equivalents of the features shown and described or portions thereof, but it is recognized that various modifications are possible within the scope of the invention claimed. Thus, it should be understood that although the present invention has been specifically disclosed by preferred embodiments and optional features, modification and variation of the concepts herein disclosed may be resorted to by those skilled in the art, and that such modifications and variations are considered to be within the scope of this invention as defined by the appended claims. Whenever a range is given in the specification, all intermediate ranges and subranges, as well as all individual values included in the ranges given are intended to be included in the disclosure. When a Markush group or other grouping is used herein, all individual members of the group and all combinations and sub-combinations possible of the group are intended to be individually included in the disclosure.

In general, the terms and phrases used herein have their art-recognized meaning, which can be found by reference to standard texts, journal references and contexts known to those skilled in the art. The above definitions are provided to clarify their specific use in the context of the invention.

In accordance with the present disclosure, a set of claims may include:
1. A method for controlling a heating process using high-altitude protection logic in a brewing device, the method comprising:
   - measuring an actual temperature of a liquid using a temperature sensor, wherein the heating process is automatically terminated when the actual temperature reaches a default target temperature programmed into a controller;
   - comparing the actual temperature to a high-altitude temperature programmed into the controller as the liquid is heated;
   - beginning running a first time period programmed into the controller if the actual temperature rises to the high-altitude temperature before reaching the default target temperature; and
   - measuring the actual temperature during the first time period such that:
      - if the actual temperature has not changed when the first time period expires, then the heating process is automatically terminated; and
      - if the actual temperature of the liquid has changed when the first time period expires, a second time period programmed into the controller begins to run, wherein the heating process is automatically terminated upon either the actual temperature rising to the default target temperature or the second time period expiring, whichever occurs first.
2. The method of claim 1, wherein a maximum value of the actual temperature measured during the heating process replaces the default target temperature programmed in the controller for subsequent uses.
3. The method of claim 1 or 2, wherein the controller is reset and the default target temperature is returned to an initial value setting when the brewing device is disconnected from a power source.
4. The method of any of claims 1 to 3, wherein the controller settings are only reset when the brewing device is disconnected from the power source for a predetermined amount of time.
5. The method of any of claims 1 to 4, wherein a keep warm mode of the brewing device uses the maximum value of the actual temperature during the heating process to update a target keep warm temperature setting.
6. The method of any of claims 1 to 5, wherein the brewing device is a digital kettle.
7. The method of any of claims 1 to 5, wherein the brewing device is an automatic coffeemaker.
8. The method of any of claims 1 to 7, wherein the temperature sensor is a negative temperature coefficient type thermistor.
9. A brewing device configured to automatically adjust a heating process for brewing beverages at different elevations, the brewing device comprising:
   - a heat source configured to heat a liquid;
   - a temperature sensor configured to measure an actual temperature of the liquid; and
   - a programmable controller configured to run a control program, receive information from the temperature sensor, and control the heat source, wherein the control program comprises settings for:
      - a default target temperature;
      - an elevation temperature;
      - a first time period having a first start time and a first end time; and
      - a second time period having a second start time and a second end time;
   - wherein the control program terminates heating by the heat source when the actual temperature measured by the temperature sensor equals the default target temperature;
   - wherein the first time period begins to run if the actual temperature of the liquid equals the elevation temperature before reaching the default target temperature;
   - wherein if the actual temperature measured as between the first start time and the first end time does not change, then the control program terminates heating by the heat source; and
   - wherein if the actual temperature as measured between the first start time and the first end time increases, then the second time period begins to run and the control program terminates heating by the heat source if:
      - the second time period expires at the second end time; or
      - the actual temperature reaches the default target temperature before the second end time.
10. The brewing device of claim 9, wherein the default target temperature programmed in the control program is replaced by a maximum value of the actual temperature measured during the heating process.
11. The brewing device of claim 9 or 10, wherein settings of the control program are reset to default when the brewing device is disconnected from a power source.
12. The brewing device of any of claims 9 to 11, wherein settings of the control program are only reset when the brewing device is disconnected from the power source for a predetermined amount of time.
13. The brewing device of any of claims 9 to 12, wherein a keep warm mode of the brewing device uses the maximum value of the actual temperature during the heating process to update a target keep warm temperature setting.
14. The brewing device of any of claims 9 to 13, wherein the brewing device is an automatic coffeemaker.
15. The brewing device of any of claims 9 to 13, wherein the brewing device is a digital kettle.
16. The brewing device of any of claims 9 to 15, wherein the temperature sensor is a negative temperature coefficient type thermistor.
17. A brewing device for making beverages, the device comprising:
   - A high-altitude protection logic programmed on a controller, the high-altitude protection logic configured to store a maximum actual temperature of a liquid heated during an initial heating process as measured by a temperature sensor, the maximum actual temperature replacing a default target temperature programmed on the controller; and
   - A keep warm mode programmed on the controller, the keep warm mode configured to initiate a subsequent heating process to maintain a target keep warm temperature, wherein the target keep warm temperature is checked against the maximum actual temperature and modified to be less than the maximum actual temperature; and
   - Wherein the keep warm mode is configured to terminate upon expiration of a keep warm time setting.
18. The brewing device of claim 17, wherein the default target temperature and the target keep warm temperature are reset to initial settings when the brewing device is disconnected from a power source for a predetermined amount of time.
19. The brewing device of claim 17 or 18, wherein the target keep warm temperature is modified to be between approximately 1-5°C less than the maximum actual temperature.
20. The brewing device of any of claims 17 to 19, wherein the keep warm time setting is configured for a duration up to and including approximately two hours.

## Claims

1. A method for controlling a heating process using high-altitude protection logic in a brewing device, the method comprising:
- measuring an actual temperature of a liquid using a temperature sensor, wherein the heating process is automatically terminated when the actual temperature reaches a default target temperature programmed into a controller;
- comparing the actual temperature to a high-altitude temperature programmed into the controller as the liquid is heated;
- beginning running a first time period programmed into the controller if the actual temperature rises to the high-altitude temperature before reaching the default target temperature; and
- measuring the actual temperature during the first time period such that:
- if the actual temperature has not changed when the first time period expires, then the heating process is automatically terminated; and
- if the actual temperature of the liquid has changed when the first time period expires, a second time period programmed into the controller begins to run, wherein the heating process is automatically terminated upon either the actual temperature rising to the default target temperature or the second time period expiring, whichever occurs first.

2. The method of claim 1, wherein a maximum value of the actual temperature measured during the heating process replaces the default target temperature programmed in the controller for subsequent uses.

3. The method of claim 2, wherein the controller is reset and the default target temperature is returned to an initial value setting when the brewing device is disconnected from a power source.

4. The method of claim 3, wherein the controller settings are only reset when the brewing device is disconnected from the power source for a predetermined amount of time.

5. The method of claim 2, wherein a keep warm mode of the brewing device uses the maximum value of the actual temperature during the heating process to update a target keep warm temperature setting.

6. The method of claim 1, wherein the brewing device is a digital kettle.

7. The method of claim 1, wherein the temperature sensor is a negative temperature coefficient type thermistor.

8. A brewing device configured to automatically adjust a heating process for brewing beverages at different elevations, the brewing device comprising:
- a heat source configured to heat a liquid;
- a temperature sensor configured to measure an actual temperature of the liquid; and
- a programmable controller configured to run a control program, receive information from the temperature sensor, and control the heat source, wherein the control program comprises settings for:
- a default target temperature;
- an elevation temperature;
- a first time period having a first start time and a first end time; and
- a second time period having a second start time and a second end time;
- wherein the control program terminates heating by the heat source when the actual temperature measured by the temperature sensor equals the default target temperature;
- wherein the first time period begins to run if the actual temperature of the liquid equals the elevation temperature before reaching the default target temperature;
- wherein if the actual temperature measured as between the first start time and the first
end time does not change, then the control program terminates heating by the heat source; and
- wherein if the actual temperature as measured between the first start time and the first
end time increases, then the second time period begins to run and the control program terminates heating by the heat source if:
- the second time period expires at the second end time; or
- the actual temperature reaches the default target temperature before the second end time.

9. The brewing device of claim 9, wherein the default target temperature programmed in the control program is replaced by a maximum value of the actual temperature measured during the heating process.

10. The brewing device of claim 10, wherein settings of the control program are reset to default when the brewing device is disconnected from a power source.

11. The brewing device of claim 11, wherein settings of the control program are only reset when the brewing device is disconnected from the power source for a predetermined amount of time.

12. The brewing device of claim 10, wherein a keep warm mode of the brewing device uses the maximum value of the actual temperature during the heating process to update a target keep warm temperature setting.

13. The brewing device of claim 8, wherein the brewing device is a digital kettle.

14. The brewing device of claim 8, wherein the temperature sensor is a negative temperature coefficient type thermistor.

15. A brewing device for making beverages, the device comprising:
- A high-altitude protection logic programmed on a controller, the high-altitude protection logic configured to store a maximum actual temperature of a liquid heated during an initial heating process as measured by a temperature sensor, the maximum actual temperature replacing a default target temperature programmed on the controller; and
- A keep warm mode programmed on the controller, the keep warm mode configured to initiate a subsequent heating process to maintain a target keep warm temperature, wherein the target keep warm temperature is checked against the maximum actual temperature and modified to be less than the maximum actual temperature; and
- Wherein the keep warm mode is configured to terminate upon expiration of a keep warm time setting.

16. The brewing device of claim 17, wherein the default target temperature and the target keep warm temperature are reset to initial settings when the brewing device is disconnected from a power source for a predetermined amount of time.

17. The brewing device of claim 17, wherein the target keep warm temperature is modified to be between approximately 1-5°C less than the maximum actual temperature.

18. The brewing device of claim 17, wherein the keep warm time setting is configured for a duration up to and including approximately two hours.
